Europäisches Patentamt

European Patent Office

Office européen des brevets

(11) Publication number: **0 246 337**
**B1**

## EUROPEAN PATENT SPECIFICATION

(45) Date of publication of the patent specification:
21.03.90

(21) Application number: **86106734.6**

(22) Date of filing: **16.05.86**

(51) Int. Cl.⁴: **F16D 69/02**

(54) Friction material.

<table>
<tr><td>

(43) Date of publication of application:
**25.11.87 Bulletin 87/48**

(45) Publication of the grant of the patent:
**21.03.90 Bulletin 90/12**

(84) Designated Contracting States:
**DE FR GB IT SE**

(56) References cited:
**EP-A- 0 079 544**
**EP-A- 0 120 200**

**PATENTS ABSTRACTS OF JAPAN, vol. 8,
no. 56 (C-214)[1493], 14th March 1984; &
JP-A-58 213 077 (AKEBONO BRAKE KOGYO
K.K.) 10-12-1983
PATENTS ABSTRACTS OF JAPAN, vol. 7,
no. 44 (M-195)[1189], 22nd February 1983; &
JP-A-57 192 638 (AKEBONO BRAKE KOGYO
K.K.) 26-11-1982**

</td><td>

(73) Proprietor: **THE S. K. WELLMAN CORP., 200 Egbert
Road, Bedford Ohio 44146(US)**

(72) Inventor: **Danko, Donald M., Jr., 9965 Gatewood Drive,
Brecksville, Ohio 44141(US)**

(74) Representative: **Patentanwaltsbüro Cohausz & Florack,
Schumannstrasse 97, D-4000 Düsseldorf 1(DE)**

</td></tr>
</table>

ACTORUM AG

## Description

The invention relates to a friction facing material including a fluorocarbon polymer and to a method of preparing such a friction facing material for use in torque-transmitting apparatus.

In order to meet the torque loading requirements, friction facing materials, including major proportions of elemental carbon in a resin binder matrix, have been developed. For example, U.S. patent No. 3,261,440, assigned to the assignee herein and incorporated by reference, discloses friction facing materials containing elemental carbon in amounts exceeding 50% by weight. (All percentages are by weight unless otherwise indicated.)

The performance of such friction facing materials has been further improved through the use of epoxy resin binder materials and additives of EP-A 79 544. However, these friction facing materials have not been entirely satisfactory, especially when used in combination with certain transmission fluids known to have high plating-out characteristics which are believed to be associated with decay of the dynamic coefficient of friction. The plating-out phenomenon refers to the formation of thin films of organic material on either or both of the cooperating torque-transmitting surfaces.

The torque transmission characteristics are determined by a number of factors, including the particular transmission fluid and the friction facing material as well as the nature of the cooperating opposing plate surface. Further, the torque transmission characteristics tend to vary with continued use and wear of the friction facing material, as well as the occurrence of plating-out of the oil, as noted above.

The maintenance of a stable dynamic coefficient of friction over the wear life of the friction facing material is desirable, since it tends to assure that the same energy transmission and performance also occur over the life of the system. Further, a stable coefficient affords smooth operation and tends to avoid distinctive initial operating characteristics during a "break-in" period. This is of particular concern in heavier duty applications, such as large vehicles or high load machinery.

Heretofore, certain combinations of friction facing material, opposing surfaces, and oil have provided a reasonable degree of stability of the coefficient throughout the wear life of the device. However, even in such cases, these satisfactory operational characteristics may be lost by the end user's replacement of the transmission oil with an oil which does not enable the synergistic effect of the combination but is otherwise acceptable.

The prior art teaches the use of fluorine-substituted elastomeric materials to provide friction facing materials in torque-transmitting apparatus. U.S. Patents Nos. 3,261,440 and 4,042,085 are representative of such prior art teachings. These fluoro-elastomers have not provided entirely satisfactory performance.

Other elastomeric materials, such as nitrile rubber, have not been found to provide reproducible results when incorporated into high carbon content friction facing materials of interest herein. These problems have been accompanied by the added difficulties of rubber-type processing including formulation with the use of Banbury mixers and similar devices in an attempt to provide acceptable mixtures of additives.

## SUMMARY OF THE INVENTION

It had now been discovered that friction facing materials containing at least 35% by weight elemental carbon in a fluorocarbon polymer binder provide stable dynamic coefficient of friction characteristics. Such friction facing materials have been found especially useful in combination with transmission fluids heretofore found to be unsatisfactory and to display undesirable plating-out characteristics (of EP-A 79 544).

The fluorocarbon polymers are exemplified by polytetrafluoroethylene (PTFE). Molding grade PTFE useful in the power molding fabrication techniques employed herein is sold under the HALON trademark by Allied Corporation and the TEFLON trademark by E. I. DuPont de Nemours. The present invention may also be practiced with the use of a fluorinated ethylenepropylene copolymer (FEP) and certain perfluoroalkoxy copolymers (PFA), which are also marketed under the TEFLON trademark by DuPont.

The friction facing material should contain from 35% to 80% elemental carbon. The carbon may be present in both its crystalline form, as in carbon black or graphite, and its amorphous forms obtained in petroleum coke, lampblack, charcoal, and like sources. Accordingly, both coke and graphite may be present and together provide the total amount of elemental carbon. Generally, the elemental carbon will be present in an amount ranging from about 45% to 70%, with no more than about 10% thereof being in the crystalline form.

The friction facing material should contain from about 15% to 50% by weight fluorocarbon polymer, and generally from about 22% to about 40%. It is presently believed that the optimization of properties occurs with about 30% to about 35% fluorocarbon polymer.

In addition to conventional additives, such as pumice, micro-cellulose and paraffin-type release agent, the fluorocarbon may also contain reinforcing fibers. Such reinforcing fibers include glass fibers, carbon fibers, graphite fibers, metallic fibers, ceramic fibers, and mineral fibers.

As indicated above, the method of fabrication of the friction facing material parallels that used in powder metallurgy or ceramics. Accordingly, a dry blend of the particulate polymer, elemental carbon, and other additives is subjected to cold-pressing under ambient temperature conditions in order to form a green friction facing compact. The term "particulate" as used herein is intended to include the fine powder size of the molding powder resin and the various forms of carbon.

The compact is sintered to provide a substantially homogeneous fluorocarbon binder having the elemental carbon and other additives uniformly distributed therein. The sintering is carried out at temperatures in the range of 288° to 399°C ( 550° to 750° F).

The friction facing compact of the present invention has significantly increased green strength and handling characteristics as compared with the prior art epoxy systems which are also powder molded. The increased green strength of the fluorocarbon compacts has enabled and substantially facilitated automation of the disc assembly procedure which was previously laborintensive.

In contrast with prior epoxy resin systems, the sintering and/or cure of the fluorocarbon binder matrix need not be performed under pressure. More particularly, green epoxy compacts were sintered while retained in a fixture which imposed compressive forces, in order to densify the resulting binder matrix and provide acceptable hardness and wear properties. The fluorocarbon facing compacts are sintered under ambient pressure conditions and, therefore, this step may be performed by simply conveying the green compacts through a suitable heating oven.

The sintered friction facing material is secured to a metallic core by means of a suitable adhesive. Conventional phenolic adhesive materials have provided satisfactory results.

In contrast with prior elastomeric systems, the fluorocarbon polymers of the present invention have been found to provide reproducible and satisfactory torque transmission characteristics. The dynamic coefficient of friction is stable, with acceptable variation being limited to less than about 25% of the original value. This stability is displayed in a variety of transmission fluids including two of the most widely used types: D. A. Torque Fluid, a type C-3 fluid by D. A. Lubricant Company and Dexron II, a petroleum-based oil by Phillips Petroleum Company. The improved performance is believed to be related to the substantial elimination of platingout on the friction surfaces.

## DETAILED DESCRIPTION OF THE INVENTION

The improved stability of the dynamic coefficient of friction in accordance with the present invention is illustrated hereinafter by durability tests which simulate the anticipated wear of the friction facing materials. The fluorocarbon polymer binders are compared with a standard epoxy friction facing material. The standard epoxy composition is an optimized formulation found acceptable in heavy duty commercial applications when used in combination with preferred transmission fluids.

The standard epoxy and fluorocarbon friction facing material formulations are summarized in Table I below. As indicated, the standard material of Example 1 was duplicated in Example 2 but for the substitution of PTFE for the epoxy. The effects of increasing proportions of fluorocarbon binder are demonstrated by Examples 3 through 8.

Table I

| Composition Weight Percent | | | | | | | | |
|---|---|---|---|---|---|---|---|---|
| Example | 1 | 2 | 3 | 4 | 5 | 6 | 7 | 8 |
| Teflon 7C[1] | | | | | 30 | 35 | 40 | |
| Halon[2] | | 22 | 26 | 30 | | | | 40 |
| Epoxy[3] | 22 | | | | | | | |
| Coke | 58 | 58 | 55 | 52 | 52 | 49 | 52 | 45 |
| Graphite | 10 | 10 | 9 | 9 | 9 | 8 | 0 | 7 |
| Pumice | 5 | 5 | 5 | 4.5 | 4.5 | 4 | 4 | 4 |
| Avicel[4] | 5 | 5 | 5 | 4.5 | 4.5 | 4 | 4 | 4 |
| Acrawax[5] | 1 | 1 | 1 | 1 | 1 | 1 | 1 | 1 |

[1] A PTFE molding resin by E.I. DuPont de Nemours
[2] A PTFE molding resin by Allied Corporation
[3] An epoxy molding resin, single component
[4] Microcrystalline cellulose by FMC Corporation
[5] A paraffin-based mold release agent

The epoxy and fluorocarbon friction facing materials were prepared using identical powder molding techniques through the preparation of the green friction facing compact. Accordingly, the resin powder, carbon, and indicated additives were dry-blended in a cone or "V" blender to provide an intimate mixture thereof. The blended mixture was then deposited in a mold cavity and cold-pressed at ambient temperature and a pressure of 1.850 to 2.780 bar (12 to 18 tons/in.2) to provide green friction facing compacts. Thereafter, the processing varied as indicated below.

The epoxy resin of the standard requires cure under pressure and, therefore, the green epoxy compacts were assembled with metallic cores having an epoxy adhesive coated thereon. The assemblies were placed in a fixture which exerts a mechanical compression load on the compacts to assure densification of the resin matrix and uniform bonding to the core. The compacts were sintered and bonded to the cores at a temperature of 233°C (450° F) and a pressure of 17,24 bar (250 psi).

The green fluorocarbon compacts were sintered at 371°C (700° F), for 2-1/2 hours. The sintering was carried out in an oven, and no external pressure was applied to the assembled compacts and cores. The sintered compacts are strong enough to permit most forms of automatic assembly with the cores. Herein, the sintered compacts were adhered to the cores using conventional heat-activated phenolic adhesives and pressure techniques to assure an intimate bond.

The epoxy and fluorocarbon friction discs or elements prepared in the foregoing manner were tested under identical conditions in Dexron II transmission fluid. (This transmission fluid is distributed by Phillips Petroleum Company.) In this test, sequential braking engagements were performed. Each engagement is designed to expend 20,000 kg/m (13,500 lbs.-ft.) of energy by bringing to rest a flywheel initially rotating at a speed of 2400 rpm. Following about 20,000 to 25,000 engagements under these conditions, it is believed that the friction facing material wear and the transmission fluid plating-out effects upon the dynamic coefficient of friction reach an equilibrium condition and no significant further changes occur in the coefficient. Accordingly, it is further believed that the change in the coefficient over the wear life of the friction facing material may be projected from the performance observed during 30,000 engagements in accordance with this test.

Referring to Table II below, the original or initial dynamic coefficients of friction are reported. The percent loss of the original coefficient of friction is reported for the standard epoxy material of Example 1, and the fluorocarbon test examples following the indicated number of engagements. Generally, the coefficient should vary by no more than 25% of its original value in order to ensure stable and uniform operation of the torque transmitting apparatus. Preferably, the variation will be no greater than 15%.

Table II

| Number of Engagements | Percent loss of original dynamic coefficient of friction[1] | | | |
|---|---|---|---|---|
| | Example I | Example II | Example IV | Example VIII |
| 1500 | 6.9 | 7.9 | 4.6 | 0 |
| 4500 | 16.0 | 11.1 | 4.6 | 0 |
| 9000 | 20.6 | 13.5 | 4.6 | 0 |
| 18000 | 25.2 | 15.9 | 6.5 | −2.8 |
| 30000 | 25.2 | 16.7 | 4.6 | 0 |
| Original coefficient | 0.130 | 0.126 | 0.108 | 0.105 |

[1] Percent loss is the percentage decrease in the coefficient after the indicated number of engagements based on the original value of the coefficient.

It is apparent from Table II that the standard epoxy material displayed a significantly greater rate of decay of dynamic coefficient than the fluorocarbon binders of the present invention. The coefficient of the standard material was reduced by 30% prior to the occurrence of one-sixth of the total number of engagements. On the other hand, the fluorocarbon binders of the present invention displayed acceptable, and even preferred, performance, with no more than about 17% decrease in the coefficient.

Referring to Table III, the coefficient of friction and wear results obtained upon testing the indicated fluorocarbon friction facing materials are reported. The composition of the standard material and each of the fluorocarbon materials is as indicated in Table I.

In the tests of Table III, the dynamic coefficient of friction and the wear were measured for each of the friction materials following 2000 engagements at the indicated energy level. Thus, a total of 6000 braking engagements was imposed upon each sample. The first energy level simulates loadings encountered in highway passenger bus and tractor trailer applications. Assuming a dynamic coefficient of friction value of 0.120, this first energy level corresponds with a unit kinetic energy value of 75,5J/cm2 (360 ft.-lbs./in.2). The second energy level simulates the loads encountered in off-the-highway equipment such as construction vehicles, and such loads correspond with a unit kinetic energy value of 103J/cm2 (506 ft.-lbs./in.2). The third energy level corresponds with overload conditions not expected to be of regular frequency or long duration in actual applications. The unit kinetic energy in this instance is 169J/cm2

(767 ft.-lbs./in.²). Thus, the higher energy level engagements correspond with exceptional torque loadings during normal usage, and the test is intended to reach the torque loading and operational limits of the friction facing materials.

Table III

| Dynamic Coefficient of Friction (ave.) | | | | | | | | |
|---|---|---|---|---|---|---|---|---|
| Example Number | 1 | 2 | 3 | 4 | 5 | 6 | 7 | 8 |
| 1st Energy Level | 0.121 | 0.128 | 0.125 | 0.127 | 0.123 | 0.124 | 0.115 | 0.111 |
| 2nd Energy Level | 0.111 | 0.116 | 0.117 | 0.112 | 0.111 | 0.107 | 0.102 | 0.091 |
| 3rd Energy Level | 0.105 | 0.112 | 0.107 | 0.105 | 0.098 | 0.094 | 0.090 | 0.078 |

| Wear (mils) | | | | | | | | |
|---|---|---|---|---|---|---|---|---|
| Example Number | 1 | 2 | 3 | 4 | 5 | 6 | 7 | 8 |
| 1st Energy Level | 1.4 | 4.7 | 3.2 | 1.9 | 3.5 | 2.3 | 2.6 | 2.5 |
| 2nd Energy Level | 2.0 | 1.5 | 1.9 | 1.6 | 0.9 | 0.4 | 1.3 | 2.7 |
| 3rd Energy Level | 1.8 | 3.5 | 2.7 | 2.7 | 2.2 | 2.1 | 1.3 | * |
| Total wear | 5.2 | 9.7 | 7.8 | 6.2 | 6.6 | 4.8 | 5.2 | |

1st Energy Level, 20.000 kg/μm (13,500 lb.-Ft), 2000 engagements
2nd Energy Level, 26.000 kg/μm (18,975 lb.-Ft), 2000 engagements
3rd Energy Level, 43.000 kg/μm (28,769 lb.-Ft), 2000 engagements
Dexron II fluid used in all tests
* Bond failure

As indicated in Table III, satisfactory coefficient and wear results are obtained in all cases with the use of fluorocarbon binders. The percentage of decrease in the dynamic coefficient is maintained within acceptable ranges in all cases in view of the increased energy level testing. As reported, there is some variation in wear which indicates preferred fluorocarbon amounts to be in the range of 30% to 35% by weight.

**Claims**

1. A friction facing material, in particular for clutch or brake assemblies, operably engageable with an opposing surface material in the presence of a transmission fluid, said friction facing material comprising having the elemental carbon a sintered matrix, being sintered under ambient pressure conditions and a fluorocarbon resin binder containing more than 35% by weight elemental carbon characterised in that the fluorocarbon resin binder is present as distributed therein as a particulate material.

2. A friction facing material as set forth in claim 1, wherein said friction facing material comprises about 20% to about 40% by weight of said fluorocarbon resin binder and from about 50% to about 80% by weight of said elemental carbon.

3. A friction facing material as set forth in claim 1 or 2, wherein said fluorocarbon binder is selected from the group consisting of a homopolymer of tetrafluoroethylene and a copolymer of tetrafluoroethylene and hexafluoropropylene.

4. A friction facing material as set forth in claim 1 or 2, wherein said fluorocarbon binder is a perfluoroalkoxy resin.

5. A friction facing material as set forth in claim 1, wherein said fluorocarbon resin comprises from about 15% to about 50% by weight of said friction facing material.

6. A friction facing material as set forth in claim 1 or 2, wherein said fluorocarbon resin binder comprises from about 30% to about 35% by weight of said friction facing material.

7. A friction facing material as set forth in claim 1, wherein said assembly is characterized by a dynamic coefficient of friction and said dynamic coefficient of friction does not vary by more than about 25% of its original value throughout the projected wear life of said friction facing material.

8. A friction facing material as set forth in claim 1, wherein said assembly is characterized by a dynamic coefficient of friction and said dynamic coefficient of friction does not vary by more than about 15% of its original value throughout the projected wear life of said friction facing material.

9. A friction facing material as set forth in claim 1, wherein said fluorocarbon binder comprises the sole binder for said friction facing material.

10. A friction facing material as set forth in claim 1, wherein said elemental carbon is selected from the group consisting of coke, graphite, and mixtures of coke and graphite.

11. A friction facing material as set forth in claim 1, wherein the unit kinetic energy loads imposed upon said friction facing material are in the range of 75,5 J/cm² (360 ft.-lbs./in.²) or greater.

12. A friction facing material as set forth in claim 1, wherein said friction facing material optionally includes one or more fiber additives selected from the group consisting of glass fibers, carbon fibers, graphits fibers, metallic fibers, ceramic fibers, and mineral fibers.

13. A method of making a friction facing material according to claims 1 to 12 comprising a metallic core having a friction facing material secured thereto, said friction facing material including at least 35% elemental carbon by weight and being adapted to operably engage and transmit torque to an opposing plate in the presence of a transmission fluid comprising

(a) mixing particulate elemental carbon and a powder fluorocarbon resin to provide an intimately blended mixture thereof,

(b) dispensing said mixture into a mold cavity, said method being characterized in that

(c) said blended mixture is compressed at ambient temperature to provide a green friction facing compact of sufficient strength to enable automated handling thereof;

(d) said green friction facing compact is heated to an elevated temperature to sinter the fluorocarbon resin powder and provide a friction facing material comprising a homogeneous matrix of the fluorocarbon resin containing the particulate elemental carbon; and

(e) said friction facing material is secured adhesively to said metallic core in manners known per se.

14. A method as set forth in claim 13, wherein step (c) includes applying a pressure in excess of about 1.655 bar (24,000 psi) to said blended mixtures to provide said green friction facing compact.

15. A method as set forth in claim 13, wherein step (c) includes applying a pressure in the range of 1.850 to 2.780 bar (12 to 18 tons/sq in.) to said blended mixture to provide said green friction facing compact.

16. A method as set forth in claim 13, wherein step (d) includes heating said facing compact to a temperature in the range of from about 288°C (550°F) to about 399°C (750°F).

17. A method as set forth in claim 13, wherein step (d) is performed without mechanical compressive loads applied to said green friction facing compact.

18. A method as set forth in claim 13, wherein step (e) includes assembling said cured friction facing material and metallic core in overlying relationship with a coating of heat-surable adhesive therebetween.

19. A method as set forth in claim 13, wherein said particulate elemental carbon includes from about 35% to about 80% coke.

20. A method as set forth in claim 13, wherein said friction facing material includes one or more additives selected from the group consisting of pumice, micro-cellulose, and reinforcing fibers.

21. A method as set forth in claim 20, wherein said reinforcing fiber is selected from the group consisting of glass fibers, carbon fibers, graphite fibers, metallic fibers, ceramic fibers, and mineral fibers.

**Patentansprüche**

1. Ein Reibungsflächenmaterial, insbesondere für Kupplungen oder Bremsen, das wirkungsvoll mit einem gegenüberliegenden Oberflächenmaterial in Anwesenheit einer Transmissionsflüssigkeit zusammenarbeiten kann, wobei das Reibungsflächenmaterial ein Bindemittel auf Basis eines Fluorkohlenstoffharzes ist, das mehr als 35 Gew.-% elementaren Kohlenstoff enthält, dadurch gekennzeichnet, daß das Fluorkohlenstoffharzbindemittel anwesend ist als gesinterte Matrix, wobei die Sinterung unter Normaldruckbedingungen durchgeführt wurde und die gesinterte Matrix den elementaren Kohlenstoff in Form von feinen Teilchen hierin verteilt enthält.

2. Ein Reibungsflächenmaterial gemäß Anspruch 1, worin das Reibungsflächenmaterial etwa 20 bis etwa 40 Gew.-% des genannten Fluorkohlenstoffharzbindemittels und etwa 50 bis etwa 80 Gew.-% des elementaren Kohlenstoffs enthält.

3. Ein Reibungsflächenmaterial gemäß Anspruch 1 oder 2, worin das Fluorkohlenstoffharzbindemittel ausgewählt ist aus der Gruppe bestehend aus einem Homopolymer von Tetrafluorethylen und einem Copolymer von Tetrafluorethylen und Hexafluorpropylen.

4. Ein Reibungsflächenmaterial gemäß Anspruch 1 oder 2, worin das Fluorkohlenstoffharzbindemittel ein Perfluoralkoxyharz ist.

5. Ein Reibungsflächenmaterial gemäß Anspruch 1, worin das Fluorkohlenstoffharz etwa 15 bis etwa 50 Gew.-% des Reibungsoberflächenmaterials ausmacht.

6. Ein Reibungsoberflächenmaterial gemäß Anspruch 1 oder 2, worin das Fluorkohlenstoffharzbindemittel etwa 30 bis etwa 35 Gew.-% des Reibungsoberflächenmaterials ausmacht.

7. Ein Reibungsoberflächenmaterial gemäß Anspruch 1, worin die Anordnung gekennzeichnet ist durch einen dynamischen Reibungskoeffizienten und dieser dynamische Reibungskoeffizient um nicht mehr als etwa 25% seines Ausgangswertes während der gesamten beabsichtigten Lebensdauer des Reibungsoberflächenmaterials variiert.

8. Ein Reibungsoberflächenmaterial gemäß Anspruch 1, worin diese Anordnung gekennzeichnet ist durch einen dynamischen Reibungskoeffizienten und dieser dynamische Reibungskoeffizient um nicht mehr als etwa 15% seines Ausgangswertes während der gesamten Lebensdauer des Reibungsoberflächenmaterials variiert.

9. Ein Reibungsoberflächenmaterial gemäß Anspruch 1, worin das Fluorkohlenstoffbindemittel das einzige Bindemittel für das Reibungsoberflächenmaterial darstellt.

10. Ein Reibungsoberflächenmaterial gemäß Anspruch 1, worin der elementare Kohlenstoff ausgewählt ist aus der Gruppe aus Koks, Graphit oder Mischungen von Koks und Graphit.

11. Ein Reibungsoberflächenmaterial gemäß Anspruch 1, worin die auf das Material angewandten kinetischen Energiebelastungen im Bereich von 75,5 J/cm² (360 Fuß-Pfund/Quadrat-Inch) oder größer sind.

12. Ein Reibungsoberflächenmaterial gemäß Anspruch 1, worin das Material gegebenenfalls ein oder mehrere Faserzusatzstoffe enthält, die ausgewählt sind aus der Gruppe bestehend aus Glasfasern, Kohlenstoffasern, Graphitfasern, metallischen Fasern, keramischen Fasern und mineralischen Fasern.

13. Verfahren zur Herstellung eines Reibungsoberflächenmaterials gemäß Ansprüchen 1 bis 12, bestehend aus einem metallischen Kern, der ein hiermit verbundenes Oberflächenmaterial aufweist, wobei das Oberflächenmaterial mindestens 35 Gew.-% elementaren Kohlenstoff und das Oberflächenmaterial so angeordnet ist, daß es effektiv mit einer gegenüberliegenden Platte in Anwesenheit einer Transmissionsflüssigkeit zusammenarbeiten kann und so Drehmoment auf die gegenüberliegende Platte in Anwesenheit der Übermittlungsflüssigkeit übermitteln kann, darin bestehend, daß

(a) Teilchen aus elementarem Kohlenstoff und ein Pulver aus einem Fluorkohlenstoffharz unter Bildung einer innigen Mischung hieraus gemischt wird,

(b) diese Mischung in eine Form gegeben wird, dadurch gekennzeichnet, daß

(c) diese Mischung bei Raumtemperatur komprimiert wird unter Bildung eines grünen komprimierten Formlings des Oberflächenmaterials von genügender Stärke derart gebildet wird, daß er automatisch weiterbearbeitet werden kann,

(d) der grüne Reiboberflächenformling auf erhöhte Temperatur erhitzt wird, um das Fluorkohlenstoffharzpulver zu sintern und ein Reiboberflächenmaterial aus einer homogenen Matrix des Fluorkohlenstoffharzproduktes zu bilden, der den teilchenförmigen elementaren Kohlenstoff enthält, und

(e) das erhaltene Reibflächenmaterial auf den metallischen Kern in bekannter Weise durch Klebung befestigt wird.

14. Verfahren gemäß Anspruch 13, worin die Stufe (c) den Schritt umfaßt, daß ein Druck oberhalb etwa 1655 bar (24 000 psi) auf das Gemisch ausgeübt wird, bei dem der grüne Formling des Reiboberflächenmaterials gebildet wird.

15. Verfahren gemäß Anspruch 13, worin die Stufe (c) den Schritt der Anwendung eines Drucks im Bereich von 1850 bis 2780 bar (12 bis 18 Tonnen/Quadrat-Inch) auf das Gemisch zur Bildung des grünen Formlings aus Reiboberflächenmaterial umfaßt.

16. Verfahren gemäß Anspruch 13, worin die Stufe (d) das Erhitzen des Formlings auf eine Temperatur im Bereich von etwa 288°C (550°F) bis etwa 399°C (750°F) umfaßt.

17. Verfahren gemäß Anspruch 13, worin die Stufe (d) ohne mechanische Druckbeladung auf den grünen Formling des Reiboberflächenmaterials durchgeführt wird.

18. Verfahren gemäß Anspruch 13, worin die Stufe (e) die Zusammensetzung des ausgehärteten Reiboberflächenmaterials und des metallischen Kerns durch Übereinanderlegen nach Aufgeben eines durch Hitze härtbaren Klebstoffes zwischen die Teile umfaßt.

19. Verfahren gemäß Anspruch 13, worin das teilchenförmige elementare Kohlenstoffprodukt etwa 35 bis etwa 80% Koks umfaßt.

20. Verfahren gemäß Anspruch 13, worin das Reiboberflächenmaterial ein oder mehrere Zusatzstoffe aus der Gruppe von Bimsstein, Mikrozellulose und Verstärkungsfasern umfaßt.

21. Verfahren gemäß Anspruch 20, worin die Verstärkungsfaser ausgewählt ist aus der Gruppe bestehend aus Glasfasern, Kohlenstoffasern, Graphitfasern, metallischen Fasern, keramischen Fasern und mineralischen Fasern.

## Revendications

1. Matériau de friction de face, en particulier pour les assemblages d'embrayage ou de frein, pouvant s'engager de manière opératoire avec un matériau de surface opposé en présence de liquide de transmission, ledit matériau de friction comprenant un liant de résine fluorocarbonée comprenant plus de 35% en poids de carbone élémentaire, caractérisé en ce que le liant de résine fluorocarbonée est présent sous la forme d'une matrice frittée ayant le carbone élémentaire qui y est réparti sous la forme d'une matière particulaire, la matrice étant frittée dans des conditions de pression ambiante.

2. Matériau de friction selon la revendication 1, dans lequel ledit matériau de friction comprend d'environ 20% à environ 40% en poids dudit liant de résine fluorocarbonée et d'environ 50% à environ 80% en poids dudit carbone élémentaire.

3. Matériau de friction selon la revendication 1 ou 2, dans lequel ledit liant fluorocarboné est choisi dans le groupe constitué par un homopolymère de tétrafluoroéthylène et un copolymère de tétrafluoroéthylène et d'hexafluoropropylène.

4. Matériau de friction selon la revendication 1 ou 2, dans lequel ledit liant fluorocarboné est une résine perfluoroalcoxy.

5. Matériau de friction selon la revendication 1, dans lequel ladite résine fluorocarbonée comprend d'environ 15% à environ 50% en poids dudit matériau de friction.

6. Matériau de friction selon la revendication 1 ou 2, dans lequel ledit liant de résine fluorocarbonée comprend d'environ 30% à environ 35% en poids dudit matériau de friction.

7. Matériau de friction selon la revendication 1, dans lequel ledit assemblage est caractérisé par un coefficient de friction dynamique et ledit coefficient de friction dynamique ne varie pas de plus d'environ 25% de sa valeur d'origine dans toute la durée de vie prévue avant usure dudit matériau de friction.

8. Matériau de friction selon la revendication 1, dans lequel ledit assemblage est caractérisé par un coefficient de friction dynamique et ledit coefficient de friction dynamique ne varie pas de plus d'environ 15% de sa valeur d'origine dans toute la durée de vie prévue avant usure dudit matériau de friction.

9. Matériau de friction selon la revendication 1, dans lequel ledit liant fluorocarboné comprend le seul liant pour ledit matériau de friction.

10. Matériau de friction selon la revendication 1, dans lequel ledit carbone élémentaire est choisi dans le groupe constitué par le coke, le graphite, et les mélanges de coke et de graphite.

11. Matériau de friction selon la revendication 1, dans lequel les charges d'énergie cinétique unitaire imposées audit matériau de friction sont dans un intervalle de 75,5 J/cm$^2$ ou plus.

12. Matériau de friction selon la revendication 1, dans lequel ledit matériau de friction comprend éventuellement un ou plusieurs additifs fibreux choisis dans le groupe constitué par les fibres de verre, les fibres de carbone, les fibres de graphite, les fibres métalliques, les fibres céramiques et les fibres minérales.

13. Procédé de préparation d'un matériau de friction selon les revendications 1 à 12 comprenant un noyau métallique auquel est fixé un matériau de friction, ledit matériau de friction incluant au moins 35% en poids de carbone élémentaire et étant adapté pour s'engager de manière opératoire et transmettre un couple de torsion à une plaque opposée en présence d'un fluide de transmission, dans lequel

(a) on mélange le carbone élémentaire en particules et une résine fluorocarbonée en poudre pour en fournir un mélange intimement malaxé,

(b) on verse ledit mélange dans une cavité de moule, ledit procédé se caractérisant en ce que

(c) on comprime ledit mélange malaxé à la température ambiante pour fournir un matériau de friction compact aggloméré de résistance suffisante pour permettre sa manipulation automatisée;

(d) on chauffe ledit matériau de friction compact aggloméré à une température élevée pour fritter la poudre de résine fluorocarbonée et fournir un matériau de friction comprenant une matrice homogène de la résine fluorocarbonée contenant le carbone élémentaire en particules; et

(e) on fixe par adhérence ledit matériau de friction au dit noyau métallique de façon connue.

14. Procédé selon la revendication 13, dans lequel l'étape (c) comprend l'application d'une pression dépassant environ 1,655 bars aux dits mélanges malaxés pour fournir ledit matériau de friction compact aggloméré.

15. Procédé selon la revendication 13, dans lequel l'étape (c) comprend l'application d'une pression située dans un intervalle de 1,850 à 2,780 bars au dit mélange malaxé pour fournir ledit matériau de friction compact aggloméré.

16. Procédé selon la revendication 13, dans lequel l'étape (d) comprend le chauffage dudit compact à une température située dans un intervalle d'environ 288°C à environ 399°C.

17. Procédé selon la revendication 13, dans lequel l'étape (d) est conduite sans charges de compression mécanique appliquées au dit compact de friction aggloméré.

18. Procédé selon la revendication 13, dans lequel l'étape (e) comprend l'assemblage dudit matériau de friction réticulé et du noyau métallique dans une relation de recouvrement avec un revêtement d'adhésif résistant à la chaleur entre eux.

19. Procédé selon la revendication 13, dans lequel ledit carbone élémentaire en particules comprend d'environ 35% à environ 80% de coke.

20. Procédé selon la revendication 13, dans lequel ledit matériau de friction comprend un ou plusieurs additifs choisis dans le groupe constitué par la pierre ponce, la micro-cellulose et les fibres de renforcement.

21. Procédé selon la revendication 20, dans lequel ladite fibre de renforcement est choisie dans le groupe constitué par les fibres de verre, les fibres de carbone, les fibres de graphite, les fibres métalliques, les fibres céramiques et les fibres minérales.